# FASCICULE DE BREVET EUROPEEN

(11) **EP 3 871 122 B1**
(45) Date de publication et mention de la délivrance du brevet: **23.08.2023**
(21) Numéro de dépôt: 19762813.4
(22) Date de dépôt: 09.09.2019
(51) Int. Cl.: G06F 21/31, B60R 25/31, B60R 25/20, B60R 25/25, G06F 21/32, H04W 12/08

(54) **PROCÉDÉ ET SYSTÈME D'AUTHENTIFICATION D'UN UTILISATEUR PAR RAPPORT À UNE SESSION DE CONDUITE D'UN VÉHICULE AUTOMOBILE**
VERFAHREN UND SYSTEM ZUR AUTHENTIFIZIERUNG EINES BENUTZERS FÜR EINE FAHRSITZUNG IN EINEM KRAFTFAHRZEUG
METHOD AND SYSTEM FOR AUTHENTICATING A USER FOR A DRIVING SESSION IN A MOTOR VEHICLE

(30) Priorité: 23.10.2018 FR 1859774
(43) Date de publication de la demande: 01.09.2021
(73) Titulaire: Renault s.a.s, 92100 Boulogne Billancourt (FR)
(72) Inventeur: BERTRAND, Patrice, 31170 TOURNEFEUILLE (FR)
(74) Mandataire: Renault Group
(86) Numéro de dépôt international: PCT/EP2019/073929
(87) Numéro de publication internationale: WO 2020/083556

(56) Documents cités:
- WO-A1-2018/009567
- FR-A1- 3 022 092
- US-A1- 2015 019 873
- US-A1- 2017 257 759
- SPIE, PO BOX 10 BELLINGHAM WA 98227-0010 USA, 21 mars 2015 (2015-03-21), XP040184229,

## Description

La présente invention concerne un procédé et un système d'authentification d'un utilisateur par rapport à une session de conduite d'un véhicule automobile, dans lequel on utilise le corps humain de l'utilisateur comme canal de transmission d'un signal électrique d'identification émis entre un dispositif d'émission et un dispositif de réception.

Un tel procédé est bien connu, notamment par l'exemple qu'en donne le document US 2017257759. Ce document décrit une méthode d'authentification d'un utilisateur notamment dans un cas d'usage visant à autoriser le déverrouillage d'un véhicule automobile. Dans ce cas, l'authentification et le déverrouillage du véhicule sont effectués au moyen d'un contact tactile entre l'utilisateur et le véhicule. Plus particulièrement, l'utilisateur est équipé d'un système portatif, tel qu'une montre, pourvue d'un dispositif d'émission d'un signal d'identification en contact direct avec la peau de l'utilisateur. Le véhicule est équipé d'un dispositif de réception disposé par exemple dans ou sur une poignée de portière du véhicule. Le signal d'identification est transmis par l'établissement d'un contact électrique entre le dispositif d'émission et le dispositif de réception au travers du corps humain de l'utilisateur. La communication se fait ainsi uniquement par contact cutané avec d'une part, le dispositif d'émission et, d'autre part, le dispositif de réception. La communication directe de données via la peau de l'utilisateur permet l'authentification.

Cependant, cette méthode d'authentification n'est pas pleinement satisfaisante. En particulier, elle exige la prévision d'un système portatif, qui soit lié à l'utilisateur, en l'occurrence une montre dans l'exemple ci-dessus. Or, ce système portatif normalement lié à l'utilisateur légitime du véhicule peut être prêté ou bien volé et ainsi servir à authentifier le contrôle d'accès au véhicule par un tiers muni du système portatif. Autrement dit, il n'est pas possible d'établir un lien fort entre la possession du système portatif et l'identité du conducteur légitime du véhicule. Cette même limitation existe aussi avec d'autres méthodes de contrôle d'accès, telles que celles basées sur l'utilisation de clé sans contact pour véhicule équipée d'une puce RFID (identification par radiofréquence).

Or, cette limitation est un frein au déploiement de services innovants liés à la conduite automobile ayant comme pré-requis l'identification du conducteur, c'est-à-dire des services dont la mise en oeuvre est exclusivement adaptée à un conducteur en particulier. A titre d'exemples non exhaustifs, il peut s'agir de services proposés par une compagnie d'assurance destinés à s'assurer que seul(s) le ou les conducteurs autorisés, valablement couverts par le contrat d'assurance souscrit pour le véhicule, puissent avoir accès au véhicule, ou encore des services proposés par les constructeurs automobiles mettant en oeuvre des paiements bancaires. Pour pouvoir mettre en oeuvre de tels services, il est nécessaire de pouvoir identifier le conducteur lors de sa prise de possession du véhicule et pouvoir également garantir qu'aucun autre conducteur ne se substitue à lui pendant toute la durée d'utilisation dudit véhicule. Autrement dit, il existe un besoin pour une méthode permettant de garantir l'identité d'un utilisateur d'un véhicule automobile pendant toute la durée d'une session de conduite du véhicule et non pas seulement lors de la prise de possession dudit véhicule.

Dans ce contexte, la présente invention a pour but de proposer un procédé d'authentification de l'identité d'un utilisateur d'un véhicule automobile, destiné à répondre à ce besoin.

A cette fin, le procédé de l'invention, par ailleurs conforme à la définition générique qu'en donne le préambule ci-dessus, est essentiellement caractérisé en ce qu'il comprend des étapes successives de :
- détection d'un évènement représentatif d'un début de ladite session de conduite,
- exécution d'une phase d'authentification de l'utilisateur du véhicule au moyen d'un capteur biométrique monté dans ledit véhicule et nécessitant un contact entre l'utilisateur et ledit capteur lors de ladite phase d'authentification et,
parallèlement à l'exécution de ladite phase d'authentification :
- exécution d'une phase de vérification de la présence à l'état assis de l'utilisateur en cours d'authentification sur le siège conducteur du véhicule, au moyen dudit canal de transmission établi entre ledit dispositif d'émission, associé audit capteur biométrique, et ledit dispositif de réception, monté dans ledit siège conducteur du véhicule, et
- autorisation du démarrage de ladite session de conduite, conditionnée à la validation desdites phases d'authentification et de vérification.

Selon un aspect de l'invention, le procédé de l'invention comprend en outre une étape de détection d'un évènement représentatif d'une fin de ladite session de conduite autorisée.

Grâce à cette combinaison d'étapes, il est possible d'associer de manière unique et non ambigüe une session de conduite d'un véhicule à un unique utilisateur et ce, tout en s'affranchissant de tout système portatif devant être lié à l'utilisateur.

Avantageusement, lesdits évènements représentatifs du début et de la fin de ladite session de conduite comprennent respectivement le bouclage et le débouclage de la ceinture de sécurité du siège conducteur du véhicule.

De préférence, la détection du début de ladite session de conduite comprend la détection préalable d'une présence sur le siège conducteur du véhicule.

De préférence, la détection du début de ladite session de conduite comprend la détection préalable d'une longueur minimale de déploiement de la ceinture de sécurité du siège conducteur.

Avantageusement, la validation de la phase de vérification consiste à comparer le signal émis par ledit dispositif d'émission et le signal reçu par ledit dispositif de réception au travers dudit canal de transmission et à vérifier le caractère identique desdits signaux.

De préférence, le signal électrique d'identification émis est généré de façon aléatoire.

Avantageusement, le procédé comprend la détection d'évènements représentatifs d'une tentative de violation de l'intégrité de ladite session de conduite autorisée.

Selon un mode de réalisation ladite détection comprend la détection d'une variation de la longueur de déploiement de la ceinture de sécurité du siège conducteur au-delà d'un seuil de détection pré-défini.

L'invention concerne également un système d'authentification d'un utilisateur par rapport à une session de conduite d'un véhicule automobile, caractérisé en ce qu'il comprend un capteur biométrique de contact monté dans le véhicule, nécessitant un contact entre l'utilisateur et ledit capteur, un dispositif d'émission d'un signal électrique d'identification, associé audit capteur biométrique, et un dispositif de réception monté dans le siège conducteur du véhicule, lesdits dispositifs d'émission et de réception étant adaptés à communiquer entre eux pour transmettre ledit signal électrique d'identification entre ledit dispositif d'émission et ledit dispositif de réception au travers d'un canal de transmission constitué par le corps humain de l'utilisateur, ledit capteur biométrique et lesdits dispositifs d'émission et de réception étant reliés à l'unité de contrôle du véhicule, ladite unité de contrôle du véhicule étant adaptée à détecter un évènement représentatif d'un début de ladite session de conduite, puis à exécuter une phase d'authentification de l'utilisateur au moyen dudit capteur biométrique et, parallèlement à l'exécution de ladite phase d'authentification, à exécuter une phase de vérification de la présence à l'état assis de l'utilisateur en cours d'authentification sur le siège conducteur du véhicule, au moyen dudit canal de transmission établi entre lesdits dispositifs d'émission et de réception et à autoriser ladite session de conduite en cas de validation desdites phases d'authentification et de vérification.

Avantageusement, ladite unité de contrôle est adaptée à détecter un évènement représentatif d'une fin de ladite session de conduite autorisée.

Avantageusement, ledit capteur biométrique comprend un capteur d'empreintes digitales et ledit dispositif d'émission comprend une électrode portée par ledit capteur d'empreintes digitales, ladite électrode étant destinée à assurer la transmission dudit signal par contact de l'utilisateur avec ledit capteur d'empreintes digitales via des impulsions électriques émises par ladite électrode dans le corps de l'utilisateur.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 illustre schématiquement un système d'authentification d'un utilisateur par rapport à une session de conduite d'un véhicule automobile, selon un exemple de réalisation conforme à la présente invention ;
- la Figure 2 illustre schématiquement un organigramme général illustrant les étapes essentielles du procédé selon l'invention.

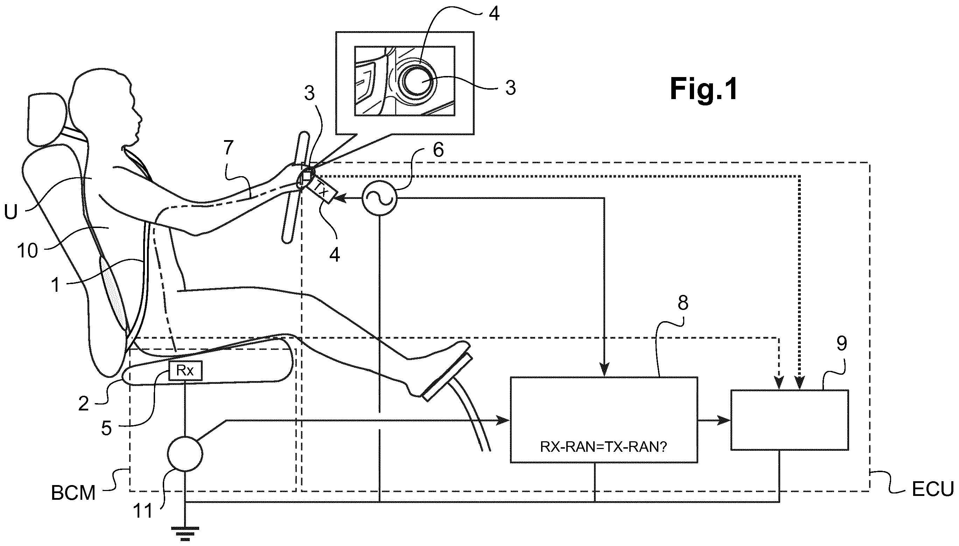

La Figure 1 illustre schématiquement un système d'authentification selon l'invention, permettant de délimiter une session de conduite d'un véhicule et d'associer cette session de conduite de manière unique et non ambigüe à un seul utilisateur, référencé U sur la figure 1. Par session de conduite, on entend une période de temps pendant lequel un utilisateur authentifié est assis et ceinturé sur le siège conducteur du véhicule.

Aussi, le système de l'invention est conçu pour permettre de garantir qu'un seul et même utilisateur authentifié a conduit le véhicule durant la totalité d'une session de conduite, ce qui revient à garantir l'intégrité de la session de conduite. Pour ce faire, il est nécessaire de pourvoir délimiter le début et la fin de la session de conduite, de pouvoir authentifier l'utilisateur du véhicule, de pouvoir associer de façon continue l'utilisateur authentifié et la session de conduite et enfin, de pouvoir détecter toute tentative de violation de l'intégrité de la session de conduite.

Concernant les moyens préférentiels mis en oeuvre par l'invention pour délimiter une session de conduite, on prévoit de détecter, en tant qu'évènements représentatifs respectivement du début et de la fin d'une session de conduite, le bouclage et le débouclage de la ceinture de sécurité 1 du siège conducteur 2 du véhicule. La détection du bouclage et du débouclage de la ceinture de sécurité peut être réalisée au travers de l'unité de contrôle dite BCM (« Body Control Module »), qui est classiquement implantée dans les véhicules pour superviser et contrôler des fonctions telles que la commande des vitres électriques, le verrouillage centralisé des portes du véhicule, ainsi que diverses commandes de confort. L'unité de contrôle BCM est également adaptée à interagir avec d'autres unités de contrôle de l'ordinateur de bord du véhicule via le bus du véhicule, en particulier avec une unité de contrôle ECU, destinée notamment à exécuter les phases d'authentification et d'association mentionnées ci-dessus. Par exemple, l'unité de contrôle ECU peut être l'unité de contrôle en charge de la gestion du système IVI (« In-Véhicule Infotainment ») du véhicule.

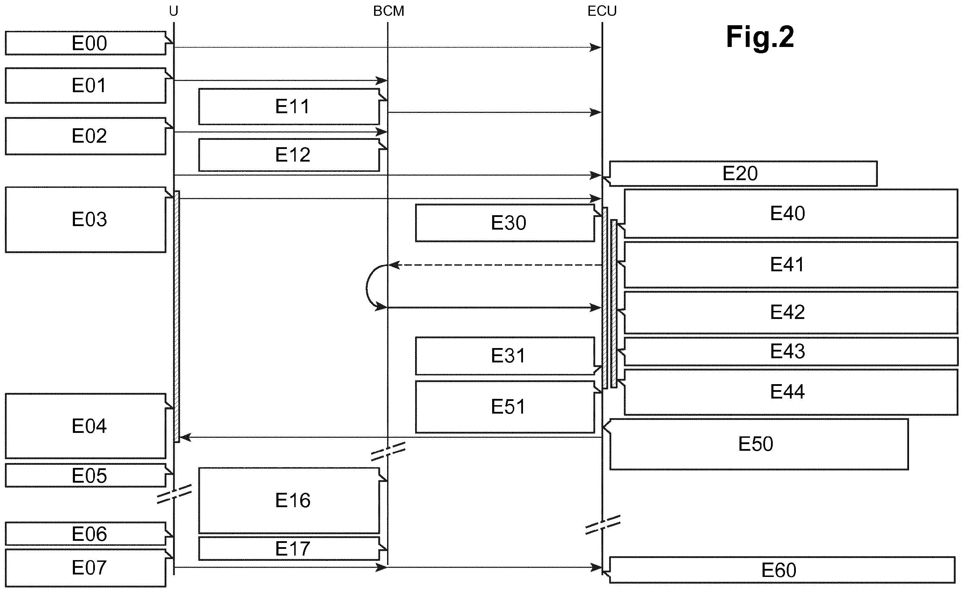

Comme décrit en référence à la figure 2, lorsque l'utilisateur U entre dans le véhicule dans une étape E00, le processus de l'invention, conduisant à délimiter une session de conduite authentifiée, implique de sa part un certain nombre d'étapes qu'il doit valider successivement. Dans une étape E01, l'utilisateur doit ainsi s'assoir sur le siège conducteur, puis dans une étape E02, il doit boucler sa ceinture de sécurité, cette dernière devant être laissée bouclée pendant l'intégralité de la session de conduite.

Suite à l'étape E01, l'unité de contrôle BCM peut être adaptée pour détecter, dans une étape E11, une présence sur le siège conducteur, au moyen d'un capteur de présence installé au niveau du siège conducteur, par exemple un capteur de poids ou un capteur de pression installé dans le siège, et à transmettre cette information de détection de présence à l'unité de contrôle ECU. Comme on le verra plus en détail par la suite, ce test de vérification de présence, effectué préalablement à la détection du bouclage de la ceinture de sécurité, pourra être utile pour renforcer la robustesse du processus d'authentification, en particulier afin d'éviter toute substitution d'un utilisateur habilité par un autre, non habilité.

Suite à l'étape E02, dans laquelle l'utilisateur assis sur le siège conducteur boucle sa ceinture de sécurité, l'unité de contrôle BCM est adaptée à détecter ce bouclage dans une étape E12 et à transmettre cette information de détection de bouclage à l'unité de contrôle ECU. La réception, dans une étape E20, de cette information de détection de bouclage par l'unité de contrôle ECU permet de déterminer le début d'une session de conduite devant être authentifiée.

L'étape suivante comprend l'exécution d'une phase d'authentification de l'utilisateur du véhicule. Cette phase d'authentification est réalisée au moyen d'un capteur biométrique monté dans ledit véhicule et plus précisément d'un capteur biométrique nécessitant un contact, incluant un contact direct ou une très forte proximité, entre l'utilisateur et ledit capteur lors de la phase d'authentification. La biométrie est couramment utilisée afin d'identifier et/ou authentifier des utilisateurs sur la base de caractéristiques physiques individuelles. Une telle authentification par biométrie, nécessite au préalable de capturer au moyen d'un capteur biométrique un échantillon biométrique de référence provenant de l'utilisateur autorisé puis de stocker cet échantillon de référence. S'ensuit une phase de vérification dans laquelle on réalise une capture d'un échantillon biométrique à comparer provenant de l'utilisateur à authentifier, puis une comparaison avec l'échantillon biométrique de référence pour valider ou non l'authentification en fonction de la correspondance entre l'échantillon à comparer et l'échantillon de référence.

En référence à la figure 1, à titre d'exemple illustratif et nullement limitatif, le capteur biométrique de contact 3 mis en oeuvre peut être un capteur d'empreintes digitales, qui est par exemple positionné à côté du bouton de démarrage du véhicule, voire même qui peut être intégré à ce dernier. Ainsi, en référence à la figure 2, dans une étape E03, il est prévu que l'utilisateur appose un de ses doigts sur ce capteur d'empreintes digitales. Cette étape E03 de demande d'authentification déclenche dans une étape E30, la phase d'authentification biométrique de l'utilisateur exécutée par l'unité de contrôle ECU.

En alternative à l'utilisation d'un capteur d'empreintes digitales et sans sortir du cadre de la présente invention, l'identification biométrique de l'utilisateur pourrait aussi être mise en oeuvre au moyen d'un capteur d'authentification du réseau veineux palmaire de l'utilisateur, ou bien encore au moyen d'un capteur d'iris.

Comme exposé précédemment, l'invention vise à permettre d'associer de façon continue l'utilisateur authentifié et la session de conduite. Cette association est réalisée en vérifiant que l'utilisateur qui cherche à s'authentifier auprès du véhicule est le même que celui qui est physiquement assis, ceinture de sécurité bouclée, sur le siège conducteur du véhicule. Pour ce faire, en référence à la figure 1, on prévoit de créer un canal de transmission au travers du corps humain 10 de l'utilisateur pour y faire circuler un signal électrique entre un dispositif d'émission 4, avantageusement associé au capteur biométrique 3, et un dispositif de réception 5, monté dans le siège conducteur 2 du véhicule, par exemple au niveau de l'assise du siège conducteur. En effet, on présume que cette partie du corps humain 10 en contact avec le siège conducteur est très vraisemblablement le postérieur ou la cuisse de l'utilisateur qui cherche à s'authentifier.

Ainsi, la communication entre le dispositif d'émission 4 et le dispositif de réception 5 est une communication intracorporelle de type HBC (Human Body Communication, communication par voie intracorporelle), mettant par exemple en oeuvre une technique de communication au moyen d'impulsions transmises via les tissus sous-cutanés du corps de l'utilisateur, ces impulsions étant générées par un circuit 6, apte à générer un signal, sous la forme d'une séquence d'impulsions HBC, destiné à circuler du dispositif d'émission 4 jusqu'au dispositif de réception 5 au travers du corps humain de l'utilisateur. Ce signal transitant du dispositif d'émission 4 vers le dispositif de réception 5 le long du canal de transmission HBC constitué par le corps humain 10 de l'utilisateur est symbolisé par la ligne en pointillés 7 à la figure 1.

Les dispositifs d'émission et de réception 4 et 5 sont constitués chacun d'une électrode, respectivement d'émission et de réception, pour établir la communication HBC entre eux.

Lorsque l'épiderme est en contact (ou à proximité) avec une électrode soumise à un potentiel électrique, le système que forme cette électrode avec l'épiderme et les tissus conducteurs situés sous l'épiderme, peut être assimilé à un condensateur. Ainsi, lorsque les deux électrodes d'émission et de réception 4, 5 sont en contact, soit direct soit à proximité, avec l'épiderme du corps humain en deux endroits distincts, il se crée deux condensateurs entre les électrodes respectives sur l'épiderme et les tissus conducteurs sous l'épiderme. Lorsque l'électrode d'émission, au contact (direct ou à proximité) de l'épiderme, est stimulée électriquement, il se crée un courant de déplacement qui traverse l'électrode d'émission et l'épiderme jusqu'aux tissus conducteurs sous cutanés, lequel courant de déplacement se propage le long des tissus conducteurs jusqu'à l'électrode de réception au travers du condensateur que cette dernière forme avec l'épiderme et les tissus conducteurs.

Avantageusement, côté émission, il peut être prévu une électrode 4 en forme d'anneau, portée par le capteur biométrique 3 et entourant préférentiellement ce dernier, de façon à pouvoir assurer la transmission du signal HBC dans le corps de l'utilisateur par contact avec le doigt de l'utilisateur au moment où ce dernier sollicite une authentification biométrique et touche le capteur biométrique 3. Il s'agit ici d'un contact direct entre le doigt de l'utilisateur et l'électrode d'émission 4 encerclant le capteur biométrique 3. Ainsi, les agencements respectifs du capteur biométrique 3 et de l'électrode d'émission 4 conduisent nécessairement l'utilisateur à faire contact avec l'électrode d'émission 4 lors d'une capture d'empreinte digitale, c'est-à-dire lorsqu'il pose son doigt sur le capteur d'empreintes afin de s'authentifier.

Il est à noter que le canal de transmission HBC entre l'électrode d'émission 4 porté par le détecteur biométrique 3 et l'électrode de réception 5 située dans le siège conducteur, ne peut se créer que si le corps d'un seul et même utilisateur est simultanément en contact (direct ou proche) avec les deux électrodes, respectivement d'émission et de réception.

En référence maintenant à la figure 2, on a vu que l'action de l'utilisateur consistant à poser son doigt sur le capteur biométrique 3 entraîne le déclenchement de la phase d'authentification biométrique E30 de l'utilisateur, qui est exécutée par l'unité de contrôle ECU.

Simultanément à l'exécution de cette phase d'authentification biométrique, l'unité de contrôle ECU est également adaptée pour exécuter dans une étape E40, la phase de vérification de la présence à l'état assis de l'utilisateur en cours d'authentification sur le siège conducteur du véhicule, au moyen du canal de transmission intracorporel établi entre les électrodes d'émission 4 et de réception 5. Ainsi, dans une étape E41, un message de test TX-RAN est émis au travers de l'électrode d'émission 4 en contact avec le doigt de l'utilisateur et est propagé le long du canal de transmission intracorporel HBC constitué par le corps de l'utilisateur. Le signal recueilli au niveau de l'électrode de réception 5 montée dans le siège conducteur, est géré par l'unité de contrôle BCM et est transmis, préférentiellement par l'intermédiaire d'un amplificateur 11, à l'unité de contrôle ECU, par exemple au moyen d'un câble électrique. L'unité de contrôle ECU reçoit donc dans étape E42 un message RX-RAN correspondant au signal capté au niveau de l'électrode de réception 5.

La réception du message de test émis TX-RAN au niveau de l'électrode de réception n'est possible que si les conditions permettant de créer un canal de communication HBC entre les deux électrodes d'émission et de réception sont vérifiées. Autrement dit, il faut nécessairement qu'une partie du corps humain soit en contact (direct ou proche) avec l'électrode d'émission (ici, on a un contact direct entre le doigt de l'utilisateur et l'électrode d'émission monté avec le capteur biométrique), et qu'une autre partie du même corps humain soit en contact (direct ou proche) avec l'électrode de réception (ici, on a un contact proche entre le postérieur de l'utilisateur et l'électrode de réception montée dans le siège conducteur).

Un module 8 de comparaison de l'unité de contrôle ECU est alors adapté à mettre en oeuvre une étape de test E43, visant à vérifier le caractère identique des messages émis TX-RAN et reçus RX-RAN via le canal de transmission intracorporel. En cas d'échec du test, le démarrage d'une session de conduite authentifiée est refusé. Par contre, en cas de succès du test, dans une étape E44, il est validé que l'utilisateur en attente d'authentification biométrique est bien celui qui est assis sur le siège conducteur.

Afin de pouvoir offrir une protection contre les attaques de type « replay », c'est-à-dire pour éviter qu'un attaquant puisse enregistrer le message de test émis TX-RAN et le rejouer ensuite, le circuit 6 est avantageusement adapté à générer des séquences aléatoires, et donc non prévisibles, d'impulsions HBC, destinées à transiter au travers du corps humain de l'utilisateur entre les électrodes d'émission et de réception.

En parallèle des étapes E40 à E44, l'unité de contrôle ECU est également adaptée pour valider la phase d'authentification biométrique de l'utilisateur. Cette vérification consiste à vérifier que l'utilisateur demandant l'authentification possède un profil biométrique connu de l'unité de contrôle, à savoir qu'il a préalablement enregistré un échantillon biométrique de référence auprès du véhicule et qu'il s'agit en conséquence d'un utilisateur autorisé et légitime. La validation de cette phase d'authentification biométrique est fournie dans une étape E31.

Ainsi, au terme des ces étapes exécutées en parallèle, un module 9 de décision de l'unité de contrôle ECU est à même de valider dans une étape E50 que l'utilisateur demandant une authentification est valablement authentifié, autrement dit qu'il possède un profil biométrique connu du système, et qu'il est assis sur le siège conducteur 2 du véhicule, avec la ceinture de sécurité 1 bouclée. Si l'une de ces conditions n'est pas vérifiée, le démarrage d'une session authentifiée est refusé.

Par contre, il est à noter que le démarrage du véhicule pourrait quand même être autorisé en cas d'échec de l'authentification, c'est-à-dire même si l'utilisateur n'est pas valablement authentifié au terme de la procédure ci-dessus. Simplement, dans ce cas, il ne s'agit pas d'une session de conduite authentifiée et l'utilisateur n'aura pas accès aux différents services liés à la conduite automobile ayant comme pré-requis l'authentification du conducteur.

Dans une étape E51, on notifie à l'utilisateur, par exemple par l'intermédiaire d'une notification visuelle ou sonore par exemple, générée par l'unité de contrôle ECU, la fin de la séquence d'authentification et le démarrage d'une session authentifiée. A noter que l'utilisateur doit laisser son doigt sur le capteur biométrique durant toute la procédure d'authentification biométrique et d'association avec la session de conduite au travers du canal HBC, c'est-à-dire jusqu'à ce qu'il soit notifié de façon visuelle ou sonore de la fin de la procédure, suite à laquelle il peut retirer son doigt dans une étape E04.

Dès lors, à partir de cette notification et jusqu'à la détection de la fin de la session de conduit ainsi authentifiée, des scenarii de conduite nécessitant un conducteur authentifié, peuvent être déployés. L'utilisateur est ainsi autorisé à démarrer le véhicule dans une étape E05.

La session de conduite authentifiée se poursuit tant que la ceinture de sécurité reste bouclée. Suite à une étape E07, dans laquelle l'utilisateur assis sur le siège conducteur déboucle sa ceinture de sécurité, par exemple après avoir éteint le moteur dans une étape E06, l'unité de contrôle BCM est adaptée à détecter le débouclage de la ceinture dans une étape E17 et à transmettre cette information de détection de débouclage à l'unité de contrôle ECU. La réception, dans une étape E60, de cette information de détection de débouclage par l'unité de contrôle ECU, déclenche la fin de la session de conduite authentifiée.

Le système de l'invention est également adapté pour permettre de garantir l'intégrité de la session de conduite authentifiée pendant toute la durée de celle-ci et, en particulier, pour garantir qu'aucun autre utilisateur ne pourra se substituer à l'utilisateur authentifié sans qu'on ne puisse le détecter. Le système est ainsi adapté pour pouvoir détecter toute tentative de violation de l'intégrité de la session de conduite et pour émettre une alerte dans une étape E16 si une telle tentative était détectée.

Par exemple, une violation d'intégrité de la session de conduite peut se produire dans le cas où un utilisateur, une fois authentifié, débouclerait sa ceinture de sécurité pour laisser sa place à un autre utilisateur, non authentifié. C'est pourquoi, la détection du débouclage de la ceinture de sécurité met immédiatement un terme à la session de conduite authentifiée.

Un autre exemple de violation d'intégrité de la session de conduite authentifiée concerne une situation où, une fois valablement authentifié, assis et ceinturé sur le siège conducteur, un utilisateur chercherait à se dégager du siège conducteur sans déboucler sa ceinture de sécurité, de façon à tenter de se faire remplacer par un autre utilisateur sans démarrer une nouvelle session de conduite et l'authentification associée. Aussi, la détection d'un tel évènement représentatif d'une tentative de violation de l'intégrité de la session de conduite, pourrait reposer sur la détection d'une variation de la longueur de déploiement de la ceinture de sécurité du siège conducteur au-delà d'un seuil de détection pré-défini. Ce seuil de détection pré-défini peut avantageusement être adapté à chaque utilisateur. Un autre moyen de parvenir à une détection similaire serait d'utiliser un capteur de tension de ceinture de sécurité, permettant d'alerter le système de tout mouvement laissant penser qu'un utilisateur ceinturé essaie de quitter le siège sans déboucler la ceinture de sécurité. Un autre moyen encore d'effectuer une telle détection serait d'utiliser le capteur de présence intégré au siège, s'il est présent.

Un autre exemple de tentative de violation d'intégrité concerne un cas où l'utilisateur bouclerait la ceinture de sécurité du siège conducteur avant de s'assoir et s'assiérait ensuite sur le siège avant de procéder à l'authentification. Un exemple de contre mesure possible pourrait s'appuyer sur une succession de détections effectuées séquentiellement, comprenant la détection d'une présence sur le siège conducteur (par exemple détection d'un poids minimum sur le siège conducteur), avant qu'une longueur minimale de déploiement de la ceinture de sécurité ne soit détectée et que le bouclage de la ceinture ne soit détecté.

De manière générale, pour pouvoir garantir l'intégrité de la session de conduite, le système est conçu pour permettre de détecter toutes les situations où un utilisateur pourrait chercher à laisser sa place, une fois authentifiée, à un autre utilisateur non authentifié, ou à tenter de biaiser l'association de l'authentification avec la session de conduite, en tentant de faire croire au système que l'utilisateur qui cherche à s'authentifier est assis avec la ceinture de sécurité bouclée, alors que ce n'est pas le cas. Comme on l'a vu dans les exemples précédents, des contre-mesures basées sur différentes détections prises seules ou en combinaison, permettront de d'autoriser la session de conduite avec un indice de confiance suffisant.

## Revendications

1. Procédé d'authentification d'un utilisateur (U) par rapport à une session de conduite d'un véhicule automobile, dans lequel on utilise le corps humain (10) de l'utilisateur (U) comme canal de transmission d'un signal électrique d'identification émis entre un dispositif d'émission (4) et un dispositif de réception (5), ledit procédé étant **caractérisé en ce qu'**il comprend des étapes successives de :
- détection (E12) d'un évènement représentatif d'un début de ladite session de conduite,
- exécution (E30) d'une phase d'authentification de l'utilisateur (U) du véhicule au moyen d'un capteur biométrique (3) monté dans ledit véhicule et nécessitant un contact entre l'utilisateur et ledit capteur lors de ladite phase d'authentification et,
parallèlement à l'exécution de ladite phase d'authentification :
- exécution (E40) d'une phase de vérification de la présence à l'état assis de l'utilisateur (U) en cours d'authentification sur le siège conducteur (2) du véhicule, au moyen dudit canal de transmission établi entre ledit dispositif d'émission (4), associé audit capteur biométrique (3), et ledit dispositif de réception (5), monté dans ledit siège conducteur (2) du véhicule, et
- autorisation (E50) du démarrage de ladite session de conduite, conditionnée à la validation desdites phases d'authentification et de vérification.

2. Procédé selon la revendication 1, **caractérisé en ce qu'**il comprend une étape de détection (E60) d'un évènement représentatif d'une fin de ladite session de conduite autorisée.

3. Procédé selon la revendication 2, **caractérisé en ce que** lesdits évènements représentatifs du début et de la fin de ladite session de conduite comprennent respectivement le bouclage et le débouclage de la ceinture de sécurité (1) du siège conducteur du véhicule.

4. Procédé selon la revendication 3, **caractérisé en ce que** la détection (E12) du début de ladite session de conduite comprend la détection préalable (E11) d'une présence sur le siège conducteur du véhicule.

5. Procédé selon la revendication 3 ou 4, **caractérisé en ce que** la détection (E12) du début de ladite session de conduite comprend la détection préalable d'une longueur minimale de déploiement de la ceinture de sécurité du siège conducteur.

6. Procédé selon l'une quelconque des revendications précédentes, **caractérisé en ce que** la validation de la phase de vérification consiste à comparer le signal émis par ledit dispositif d'émission (4) et le signal reçu par ledit dispositif de réception (5) au travers dudit canal de transmission et à vérifier le caractère identique desdits signaux.

7. Procédé selon l'une quelconque des revendications précédentes, **caractérisé en ce que** le signal électrique d'identification émis est généré de façon aléatoire.

8. Procédé selon l'une quelconque des revendications précédentes, **caractérisé en ce qu'**il comprend la détection d'évènements représentatifs d'une tentative de violation de l'intégrité de ladite session de conduite autorisée.

9. Procédé selon la revendication 8, **caractérisé en ce que** ladite détection comprend la détection d'une variation de la longueur de déploiement de la ceinture de sécurité du siège conducteur au-delà d'un seuil de détection pré-défini.

10. Système d'authentification d'un utilisateur (U) par rapport à une session de conduite d'un véhicule automobile, **caractérisé en ce qu'**il comprend un capteur biométrique de contact (3) monté dans le véhicule, un dispositif d'émission (4) d'un signal électrique d'identification, associé audit capteur biométrique (3), et un dispositif de réception (5) monté dans le siège conducteur (2) du véhicule, lesdits dispositifs d'émission et de réception étant adaptés à communiquer entre eux pour transmettre ledit signal électrique d'identification entre ledit dispositif d'émission et ledit dispositif de réception au travers d'un canal de transmission constitué par le corps humain (10) de l'utilisateur, ledit capteur biométrique et lesdits dispositifs d'émission et de réception étant reliés à au moins une unité de contrôle (BCM, ECU) du véhicule, ladite au moins une unité de contrôle du véhicule étant adaptée à détecter un évènement représentatif d'un début de ladite session de conduite, puis à exécuter une phase d'authentification de l'utilisateur au moyen dudit capteur biométrique et, parallèlement à l'exécution de ladite phase d'authentification, à exécuter une phase de vérification de la présence à l'état assis de l'utilisateur en cours d'authentification sur le siège conducteur du véhicule, au moyen dudit canal de transmission établi entre lesdits dispositifs d'émission et de réception et à autoriser ladite session de conduite en cas de validation desdites phases d'authentification et de vérification.

11. Système selon la revendication 10, **caractérisé en ce que** ladite unité de contrôle est adaptée à détecter un évènement représentatif d'une fin de ladite session de conduite autorisée.

12. Système selon la revendication 10 ou 11, **caractérisé en ce que** ledit capteur biométrique (3) comprend un capteur d'empreintes digitales et ledit dispositif d'émission (4) comprend une électrode portée par ledit capteur d'empreintes digitales, ladite électrode étant destinée à assurer la transmission dudit signal par contact de l'utilisateur avec ledit capteur d'empreintes digitales via des impulsions électriques émises par ladite électrode dans le corps de l'utilisateur.

## Patentansprüche

1. Verfahren zur Authentifizierung eines Benutzers (U) bezüglich einer Fahrsitzung eines Kraftfahrzeugs, wobei der Körper (10) des Benutzers (U) als Übertragungskanal eines elektrischen Identifikationssignals verwendet wird, das zwischen einer Sendevorrichtung (4) und einer Empfangsvorrichtung (5) gesendet wird, wobei das Verfahren **dadurch gekennzeichnet ist, dass** es die aufeinanderfolgenden Schritte enthält:
- Erkennung (E12) eines für einen Anfang der Fahrsitzung repräsentativen Ereignisses,
- Ausführung (E30) einer Phase der Authentifizierung des Benutzers (U) des Fahrzeugs mittels eines biometrischen Sensors (3), der in das Fahrzeug montiert ist und in der Authentifizierungsphase einen Kontakt zwischen dem Benutzer und dem Sensor erfordert, und
parallel zur Ausführung der Authentifizierungsphase:
- Ausführung (E40) einer Phase der Überprüfung der Anwesenheit des Benutzers (U) während der Authentifizierung im sitzenden Zustand auf dem Fahrersitz (2) des Fahrzeugs mittels des zwischen der dem biometrischen Sensor (3) zugeordneten Sendevorrichtung (4) und der in den Fahrersitz (2) des Fahrzeugs montierten Empfangsvorrichtung (5) aufgebauten Übertragungskanals, und
- Genehmigung (E50) des Starts der Fahrsitzung, abhängig von der Validierung der Authentifizierungs- und Überprüfungsphasen.

2. Verfahren nach Anspruch 1, **dadurch gekennzeichnet, dass** es einen Schritt der Erkennung (E60) eines für ein Ende der genehmigten Fahrsitzung repräsentativen Ereignisses enthält.

3. Verfahren nach Anspruch 2, **dadurch gekennzeichnet, dass** die für den Anfang und das Ende der Fahrsitzung repräsentativen Ereignisse das Anlegen bzw. das Lösen des Sicherheitsgurts (1) des Fahrersitzes des Fahrzeugs enthalten.

4. Verfahren nach Anspruch 3, **dadurch gekennzeichnet, dass** die Erkennung (E12) des Anfangs der Fahrsitzung die vorherige Erkennung (E11) einer Anwesenheit auf dem Fahrersitz des Fahrzeugs enthält.

5. Verfahren nach Anspruch 3 oder 4, **dadurch gekennzeichnet, dass** die Erkennung (E12) des Anfangs der Fahrsitzung die vorherige Erkennung einer minimalen Ausziehlänge des Sicherheitsgurts des Fahrersitzes enthält.

6. Verfahren nach einem der vorhergehenden Ansprüche, **dadurch gekennzeichnet, dass** die Validierung der Überprüfungsphase darin besteht, das von der Sendevorrichtung (4) gesendete Signal und das von der Empfangsvorrichtung (5) über den Übertragungskanal empfangene Signal zu vergleichen und den gleichen Charakter der Signale zu überprüfen.

7. Verfahren nach einem der vorhergehenden Ansprüche, **dadurch gekennzeichnet, dass** das gesendete elektrisches Identifikationssignal zufällig erzeugt wird.

8. Verfahren nach einem der vorhergehenden Ansprüche, **dadurch gekennzeichnet, dass** es die Erkennung von für einen Versuch der Verletzung der Integrität der genehmigten Fahrsitzung repräsentativen Ereignissen enthält.

9. Verfahren nach Anspruch 8, **dadurch gekennzeichnet, dass** die Erkennung die Erkennung einer Änderung der Ausziehlänge des Sicherheitsgurts des Fahrersitzes über eine vordefinierte Erkennungsschwelle hinaus enthält.

10. System zur Authentifizierung eines Benutzers (U) bezüglich einer Fahrsitzung eines Kraftfahrzeugs, **dadurch gekennzeichnet, dass** es einen in das Fahrzeug montierten biometrischen Kontaktsensor (3), eine dem biometrische Sensor (3) zugeordnete Sendevorrichtung (4) eines elektrischen Identifikationssignals und eine in den Fahrersitz (2) des Fahrzeugs montierte Empfangsvorrichtung (5) enthält, wobei die Sende- und Empfangsvorrichtungen geeignet sind, miteinander zu kommunizieren, um das elektrische Identifikationssignal zwischen der Sendevorrichtung und der Empfangsvorrichtung über einen vom menschlichen Körper (10) des Benutzers gebildeten Übertragungskanal zu übertragen, wobei der biometrische Sensor und die Sende- und Empfangsvorrichtungen mit mindestens einer Steuereinheit (BCM, ECU) des Fahrzeugs verbunden sind, wobei die mindestens eine Steuereinheit des Fahrzeugs geeignet ist, ein für einen Anfang der Fahrsitzung repräsentatives Ereignis zu erkennen, dann eine Phase der Authentifizierung des Benutzers mittels des biometrischen Sensors auszuführen, und parallel zur Ausführung der Authentifizierungsphase eine Phase der Überprüfung der Anwesenheit des Benutzers während der Authentifizierung im sitzenden Zustand auf dem Fahrersitz des Fahrzeugs mittels des zwischen den Sende- und Empfangsvorrichtungen aufgebauten Übertragungskanals auszuführen, und die Fahrsitzung im Fall der Validierung der Authentifizierungs- und Überprüfungsphasen zu genehmigen.

11. System nach Anspruch 10, **dadurch gekennzeichnet, dass** die Steuereinheit geeignet ist, ein für ein Ende der genehmigten Fahrsitzung repräsentatives Ereignis zu erkennen.

12. System nach Anspruch 10 oder 11, **dadurch gekennzeichnet, dass** der biometrische Sensor (3) einen Fingerabdrucksensor enthält, und die Sendevorrichtung (4) eine vom Fingerabdrucksensor getragene Elektrode enthält, wobei die Elektrode dazu bestimmt ist, die Übertragung des Signals durch Kontakt des Benutzers mit dem Fingerabdrucksensor über elektrische Impulse zu gewährleisten, die von der Elektrode in den Körper des Benutzers gesendet werden.

## Claims

1. Method for authenticating a user (U) with respect to a motor vehicle driving session, wherein the human body (10) of the user (U) is used as channel for transmission of an identification electrical signal emitted between an emission device (4) and a reception device (5), said method being **characterized in that** it comprises successive steps of:
- detection (E12) of an event representative of a start of said driving session,
- execution (E30) of a phase of authentication of the user (U) of the vehicle by means of a biometric sensor (3) mounted in said vehicle and necessitating a contact between the user and said sensor in said authentication phase, and,
in parallel with the execution of said authentication phase:
- execution (E40) of a phase of verification of the presence in the seated state of the user (U) currently being authenticated on the driver's seat (2) of the vehicle, by means of said transmission channel established between said emission device (4), associated with said biometric sensor (3), and said reception device (5), mounted in said driver's seat (2) of the vehicle,
and
- authorization (E50) to start said driving session, conditioned on the validation of said authentication and verification phases.

2. Method according to Claim 1, **characterized in that** it comprises a step of detection (E60) of an event representative of an end of said authorized driving session.

3. Method according to Claim 2, **characterized in that** said events representative of the start and of the end of said driving session respectively comprise the fastening and the unfastening of the safety belt (1) of the driver's seat of the vehicle.

4. Method according to Claim 3, **characterized in that** the detection (E12) of the start of said driving session comprises the prior detection (E11) of a presence on the driver's seat of the vehicle.

5. Method according to Claim 3 or 4, **characterized in that** the detection (E12) of the start of said driving session comprises the prior detection of a minimum length of deployment of the safety belt of the driver's seat.

6. Method according to any one of the preceding claims, **characterized in that** the validation of the verification phase consists in comparing the signal emitted by said emission device (4) and the signal received by said reception device (5) through said transmission channel and in verifying the identical character of said signals.

7. Method according to any one of the preceding claims, **characterized in that** the identification electrical signal emitted is generated randomly.

8. Method according to any one of the preceding claims, **characterized in that** it comprises the detection of events representative of an attempt to violate the integrity of said authorized driving session.

9. Method according to Claim 8, **characterized in that** said detection comprises the detection of a variation of the length of deployment of the safety belt of the driver's seat beyond a predefined detection threshold.

10. System for authenticating a user (U) with respect to a motor vehicle driving session, **characterized in that** it comprises a contact biometric sensor (3) mounted in the vehicle, an emission device (4) for emitting an identification electrical signal, associated with said biometric sensor (3), and a reception device (5) mounted in the driver's seat (2) of the vehicle, said emission and reception devices being suitable for communicating with one another to transmit said identification electrical signal between said emission device and said reception device through a transmission channel composed of the human body (10) of the user, said biometric sensor and said emission and reception devices being linked to at least one control unit (BCM, ECU) of the vehicle, said at least one control unit of the vehicle being suitable for detecting an event representative of a start of said driving session, then executing a phase of authentication of the user by means of said biometric sensor and, in parallel with the execution of said authentication phase, executing a phase of verification of the presence in the seated state of the user currently being authorized on the driver's seat of the vehicle, by means of said transmission channel established between said emission and reception devices and authorizing said driving session in case of validation of said authentication and verification phases.

11. System according to Claim 10, **characterized in that** said control unit is suitable for detecting an event representative of an end of said authorized driving session.

12. System according to Claim 10 or 11, **characterized in that** said biometric sensor (3) comprises a fingerprint sensor and said emission device (4) comprises an electrode borne by said fingerprint sensor, said electrode being intended to ensure the transmission of said signal by contact of the user with said fingerprint sensor via electrical pulses emitted by said electrode in the body of the user.
